# EUROPÄISCHE PATENTANMELDUNG

(11) **EP 3 957 386 A1**
(43) Veröffentlichungstag der Anmeldung: **23.02.2022**
(21) Anmeldenummer: 20191556.8
(22) Anmeldetag: 18.08.2020
(51) Int. Cl.: B01D 53/94, B01J 23/56, B01J 29/76, B01J 35/00, B01D 53/86, B01J 23/42

(54) **KATALYSATOR ZUR REDUZIERUNG VON AMMONIAK-EMMISIONEN**

(71) Anmelder: UMICORE AG & Co. KG, 63457 Hanau-Wolfgang (DE)
(72) Erfinder: SEYLER, Michael, 63814 Mainaschaff (DE); COLOMBO, Massimo, 63450 Hanau (DE)

(57) **Zusammenfassung**

Die vorliegende Erfindung betrifft einen Katalysator, umfassend ein Trägersubstrat der Länge L, Beschichtung A, als erste Schicht auf dem Träger angeordnet und Platin auf einem Metalloxid enthaltend und Beschichtung B, als zweite Schicht auf Beschichtung A aufgebracht, Cu-ausgetauschtes Molekularsieb und kein Edelmetall enthaltend, wobei die Washcoatgesamtmenge von Beschichtung A 40 g/l Washcoat oder mehr, bezogen auf das beschichtete Katalysatorvolumen, beträgt.

## Beschreibung

### Technisches Gebiet

Die vorliegende Erfindung betrifft einen Katalysator zur Oxidation von Ammoniak, der in Abgasnachbehandlungsanlagen, insbesondere in der Fahrzeugtechnik, verwendet wird.

### Beschreibung

An die Reinigung der Abgase von Kraftfahrzeugen werden immer strengere Anforderungen gestellt. Während Partikel durch Filtration entfernt werden können, müssen unvollständig verbrannte Kohlenwasserstoffe (HC), Kohlenmonoxid (CO) und Stickoxide (NOₓ) zu Wasser, Kohlenstoffdioxid und Stickstoff umgesetzt werden. Dies erfolgt über katalytisch aktive Feststoffe, welche in der Regel als Beschichtung auf Trägersubstraten aufgebracht sind. Bei mager betriebenen Motoren ist der Umsatz von HC und CO über Oxidationskatalysatoren möglich, die Reduktion von NOx zu Stickstoff jedoch nicht. Hierzu ist entweder der Einsatz von NOx-Speicherkatalysatoren erforderlich, oder die Verwendung von sogenannten SCR-Katalysatoren zwecks selektiver katalytischer Reduktion (SCR). Während NOx-Speicherkatalysatoren periodisch regeneriert werden müssen, ist dies bei SCR-Katalysatoren nicht erforderlich.

Jedoch erfordert die Verwendung von SCR-Katalysatoren die Zudosierung von Reduktionsmittel. Gängige Praxis ist die Einspritzung einer wässrigen Lösung von Harnstoff in den Abgasstrang vor dem SCR-Katalysator. Bei Temperaturen oberhalb von 175°C bildet sich durch Hydrolyse Ammoniak (NH₃) und CO₂:

(NH₂)₂CO + H₂O → 2 NH₃ + CO₂

Das gebildete Ammoniak wiederum dient als Reduktionsmittel für die Reduktion der Stickoxide über den SCR-Katalysator zu Stickstoff:

x NH₃ + y NOₓ (+ O₂) → ½ (x+y) N₂ + ^{3x}/₂ H₂O

Besonders schnell läuft die Reaktion bei einem Verhältnis NO/NO₂ ≈ 1 ab:

2NH₃ + NO + NO₂ → 2N₂ + 3H₂O

Um einen möglichst vollständigen Umsatz der Stickoxide zu erreichen, wird der Harnstoff leicht überdosiert. Dies wiederum führt zu nicht umgesetztem Ammoniak im Abgas, was aufgrund seiner toxischen Wirkung unerwünscht ist und weshalb Ammoniakemissionen zunehmend in der Abgasgesetzgebung limitiert werden.

Aus diesem Grunde werden sogenannte "Ammoniak-Schlupf-Katalysatoren" (ASC) eingesetzt, um über den SCR-Katalysator nicht umgesetztes Ammoniak umzusetzen. Dabei wird das Ammoniak zu Stickstoff oxidiert:

4NH₃ + 3O₂ → 2N₂ + 6H₂O

Die für die Ammoniak-Oxidation aktiven Katalysatorbestandteile werden im Folgenden AMOX genannt.

Im Vergleich zu Palladium- und Rhodiumkatalysatoren zeigen Platinkatalysatoren die höchste Ammoniak-Oxidationsaktivität (Hansen T.K. (2017). Kgs. Lyngby: Technical Univ. of Denmark (DTU)).

Das Edelmetall wird für die AMOX-Komponente auf ein Metalloxid aufgebracht. Aluminiumoxid (Al₂O₃) kann als Trägeroxid verwendet werden, da es eine ausgezeichnete thermische Stabilität aufweist, doch auch Titanoxid (TiO₂) kann verwendet werden. Die Washcoatbeladungsmenge wird dann durch ein Metalloxid eingestellt, welches zugemischt wird und gleich mit dem Trägeroxid sein kann, aber nicht muss. Die Menge dieses Verdünnungsoxids wird so eingestellt, dass bereits eine vollständige Beschichtung des Trägersubstrats erfolgt, jedoch die Beladung möglichst dünn ist, um die Diffusionshemmung gering zu halten. Eine Washcoatbeladung von 25 g/l, bezogen auf das Katalysatorvolumen, reicht meist hierfür aus.

Allerdings weisen herkömmliche Al₂O₃-geträgerte AMOX-Katalysatoren eine unzureichende Selektivität für die Oxidation zu Stickstoff (N₂) auf. Als unerwünschte Nebenreaktionen kommt es zur Oxidation von Ammoniak zu NOₓ und N₂O. Dies ist selbstverständlich kontraproduktiv für die Reduzierung des Stickoxids und zudem auch problematisch aufgrund seiner Wirkung als Treibhausgas.

Um die Selektivität zu erhöhen, wird obiger AMOX-Katalysator auch mit SCR-aktiven Katalysatorzusammensetzungen kombiniert (WO2016/205506 A1, US2008/292519 A1, US2014/212350 A1, US2014/0157763 A1, US2015/037233 A1). Hierfür eignet sich ein Cu-ausgetauschter Zeolith. Diese SCR-aktiven Zusammensetzungen werden in der Regel als zweite (obere) Schicht auf die AMOX-Katalysatorschicht aufgebracht. Diese Kombination erlaubt durch nachfolgende Reduktion von NOₓ die Selektivität des Katalysators zu N₂ zu erhöhen, und stellt als Gesamtheit den Ammoniak-Schlupf-Katalysator (ASC) dar.

Allerdings diffundiert das Cu über die Lebensdauer des ASC teilweise in den AMOX-Katalysator und führt hier zur teilweisen Vergiftung des Platins, was wiederum die katalytische Aktivität des AMOX-Katalysators senkt.

Aufgabe der vorliegenden Erfindung ist es deshalb, einen Ammoniak-Schlupf-Katalysator bereitzustellen, der eine geringere Deaktivierung durch Vergiftung des Platins mit Cu aufweist als bekannte Ammoniak-Schlupf-Katalysatoren des Standes der Technik.

Überraschenderweise hat sich gezeigt, dass eine größere Menge an Verdünnungsoxid in der AMOX-Schicht der Alterung des Katalysators entgegenwirkt, so dass bei unverändertem Edelmetallgehalt die katalytische Aktivität mit zunehmender Washcoatbeladung zunimmt. Dies ist insofern überraschend, da durch eine dickere Schicht eine erhöhte Diffusionshemmung zu erwarten ist, bei unverändertem Edelmetallgehalt jedoch nicht mehr katalytische Zentren zur Verfügung stehen. Somit sollte die katalytische Aktivität gesenkt werden. Die Erfinder vermuten, dass die Vergiftung des Platins durch Kupfer durch eine größere Menge an Verdünnungsoxid in der AMOX-Schicht gesenkt wird.

Die Aufgabe wird deshalb gelöst durch einen Ammoniak-Schlupf-Katalysator, dessen Ammoniak-Oxidationsschicht derart gestaltet ist, dass ihre katalytischen Eigenschaften weniger stark durch Cu-Eintrag beeinflusst werden als bei Ammoniak-Schlupf-Katalysatoren des Standes der Technik.

Im Folgenden wird die Erfindung in Detail beschrieben.

### Die Erfindung betrifft einen Katalysator, umfassend

- ein Trägersubstrat der Länge L, das sich zwischen einem Ende X und einem Ende Y erstreckt
- Beschichtung A, als erste Schicht auf dem Träger angeordnet und Platin auf einem Metalloxid α und ein Metalloxid β, das kein Edelmetall trägt, enthaltend, und
- Beschichtung B, als zweite Schicht auf Beschichtung A aufgebracht, ein Cu-ausgetauschtes Molekularsieb und kein Edelmetall enthaltend,
wobei die Washcoatgesamtmenge von Beschichtung A 40g/l oder mehr Washcoat, bezogen auf das beschichtete Katalysatorvolumen, beträgt.

Als Trägersubstrate für diese Katalysatoren können sowohl Durchfluss- als auch Filtersubstrate verwendet werden. Durchflusssubstrate sind dem Fachmann bekannt und sind am Markt erhältlich. Sie bestehen beispielsweise aus Cordierit, Aluminiumtitanat oder Metallfolie.

Auch können sogenannte ,corrugated substrates' als Durchflusssubstrate verwendet werden. Diese sind dem Fachmann als Substrate aus gewellten Blättern, welche aus inerten Materialien bestehen, bekannt. Geeignete inerte Materialien sind zum Beispiel faserförmige Materialien mit einem durchschnittlichen Faserdurchmesser von 50 bis 250 µm und einer durchschnittlichen Faserlänge von 2 bis 30 mm. Bevorzugt sind faserförmige hitzebeständige Materialien aus Siliziumdioxid, insbesondere aus Glasfasern.

Zur Herstellung solcher Trägersubstrate werden zum Bespiel Blätter aus den genannten Fasermaterialien in bekannter Weise gewellt und die einzelnen gewellten Blätter zu einem zylindrischen monolithisch strukturierten Körper mit den Körper durchziehenden Kanälen geformt. Vorzugsweise wird durch Aufschichten einer Anzahl der gewellten Blätter zu parallelen Schichten mit unterschiedlicher Orientierung der Wellung zwischen den Schichten ein monolithisch strukturierter Körper mit einer kreuzweisen Wellungsstruktur geformt. In einer Ausführungsform können zwischen den gewellten Blättern glatte Blätter angeordnet sein.

Metallene Trägersubstrate bestehen in der Regel aus Strukturen aus gewellten Blechen, in die auch glatte Blechlagen eingearbeitet sein können. In der Regel werden diese Bleche gewickelt, so dass sich Kanalstrukturen bilden, deren Kanäle parallel verlaufen und sich von einem Ende des Substrates bis zum anderen Ende erstrecken. Die Bleche können durchgehend oder mit Löchern versehen sein, um den Gasaustausch zwischen den Kanälen zu ermöglichen. Zudem können diese Blechstrukturen so geformt sein, dass potentielle Partikelemissionen von der Struktur aufgefangen werden (sog. "offene" Filtersubstrate).

Trägersubstrate können auch elektrisch beheizbar ausgebildet sein, um schneller den Katalysator auf die gewünschte Betriebstemperatur zu bringen. In dem Fall wird entweder das beschichtete Trägersubstrat selbst als elektrischer Widerstand ausgebildet und, von elektrischem Strom durchflossen, geheizt, oder eine ebenso ausgebildete Scheibe wird dem beschichteten Trägersubstrat dem Abgasstrom aufwärts vorgeschaltet, so dass das Abgas erhitzt wird, bevor es durch das beschichtete Trägersubstrat strömt. Neuerdings wurde auch die induktive Beheizung eines Katalysators vorgeschlagen, die durch Einbringung von Partikeln aus Magnetwerkstoffen in die Beschichtung ermöglicht wird (WO2017/195107 A2).

Ein Wandflussfilter ist ein Tragkörper, der Kanäle der Länge L umfasst, die sich parallel zwischen einem ersten und einem zweiten Ende des Wandflussfilters erstrecken, die abwechselnd entweder am ersten oder am zweiten Ende verschlossen und die durch poröse Wände getrennt sind. Sie bestehen beispielsweise aus Silizium-Carbid, Aluminiumtitanat oder Cordierit. Wandflussfilter weisen im unbeschichteten Zustand Porositäten von beispielsweise 30 bis 80%, insbesondere 50 bis 75% auf. Ihre durchschnittliche Porengröße beträgt im unbeschichteten Zustand beispielsweise 5 bis 30 µm.

In der Regel sind die Poren des Wandflussfilters sogenannte offene Poren, das heißt sie haben eine Verbindung zu den Kanälen. Des Weiteren sind die Poren in der Regel untereinander verbunden. Dies ermöglicht einerseits die leichte Beschichtung der inneren Porenoberflächen und andererseits eine leichte Passage des Abgases durch die porösen Wände des Wandflussfilters.

In einer bevorzugten Ausführungsform ist das Trägersubstrat ein Durchflusssubstrat.

In einer bevorzugten Variante der vorliegenden Erfindung beträgt die Washcoatgesamtmenge von Beschichtung A 50 g/l oder mehr, bezogen auf das beschichtete Katalysatorvolumen. Bevorzugt wird für die Beschichtung A eine Washcoatgesamtmenge von 75 g/l oder weniger, bezogen auf das beschichtete Katalysatorvolumen gewählt, da eine höhere Beladung die Alterungsstabilität nur noch wenig verbessert, aber der Materialaufwand und damit die Kosten als auch die Staudruckerhöhung durch die Beschichtung sich erhöhen.

Besonders bevorzugt beträgt deshalb die Washcoatgesamtmenge für die Beschichtung A 40g/l bis 75 g/l, ganz besonders bevorzugt 50 g/l bis 75 g/l, bezogen auf das beschichtete Katalysatorvolumen.

Als Metalloxid α bzw. Metalloxid β in Beschichtung A kann jeweils Aluminiumoxid, Titanoxid, Ceroxid, Siliziumoxid und/oder Zirkonoxid verwendet werden. Dem Fachmann ist bekannt, dass Aluminiumoxid durch Zusätze stabilisiert sein kann. Auch eine Mischung aus verschiedenen Metalloxiden oder ein oder mehrere Mischoxide können verwendet werden. Als eine Mischung aus Metalloxiden soll in dieser Erfindung ein Material verstanden werden, dass aus zwei oder mehr physikalisch gemischten Metalloxiden besteht. Als ein Mischoxid soll in dieser Erfindung ein Material verstanden werden, dessen Kristallgitter aus Sauerstoff und Kationen von zwei oder mehr Metallen besteht.

In einer Ausführungsform der vorliegenden Erfindung sind Metalloxid α und Metalloxid β unterschiedlich. Dies erlaubt, für Platin das ideale Trägeroxid als Metalloxid α zu wählen, und zugleich ein Verdünnungsoxid als Metalloxid β zu verwenden, welches am besten die Alterungsstabilität verbessert, da mit unterschiedlichen Oxiden unterschiedlich starke Effekte festgestellt wurden. So zeigt Titanoxid gute Eigenschaften als Trägeroxid (Metalloxid α). Aluminiumoxid zeigt gute Eigenschaften als Verdünnungsoxid (Metalloxid β). Die Erfinder vermuten, dass Aluminiumoxid besonders effektiv die Cu-Migration hemmt. Bevorzugt ist Metalloxid α Titanoxid und Metalloxid β Aluminiumoxid.

In einer Ausführungsvariante enthält der Katalysator außer Platin kein weiteres Edelmetall, das heißt neben Platin insbesondere kein Palladium und kein Rhodium.

Bevorzugt liegt in Beschichtung A das Platin in Form von Partikeln auf dem Metalloxid α vor mit einem über die Partikelanzahl gemittelten durchschnittlichen Partikeldurchmesser von 50 bis 200 nm, bevorzugt 80 bis 120 nm.

Als 'durchschnittlicher Partikeldurchmesser' gilt in dieser Erfindung der durchschnittliche Durchmesser der Pt-Kristallite, welcher aus Röntgenbeugungsaufnahmen anhand des [111]-Hauptreflexes bei ca. 39,8° 2Theta über die Peakbreite (Full Width at Half Maximum; FWHM) berechnet wird. Hierbei wird als Standard Silizium mit einem Peak bei 28,4° 2Theta und einer FWHM von 0,06° 2Theta verwendet.

Bevorzugt handelt es sich bei dem in Beschichtung B enthaltenden Cu-ausgetauschten Molekularsieb um einen Cu-ausgetauschten Zeolithen. Zeolithe sind zwei- oder drei-dimensionale Strukturen, deren kleinste Substrukturen als SiO₄- und AlO₄-Tetraeder betrachtet werden können. Sie werden deshalb auch 'Silikoaluminate' genannt. Diese Tetraeder bilden größere Strukturen, wobei zwei jeweils über ein gemeinsames Sauerstoffatom miteinander verbunden sind. So können unterschiedlich große Ringstrukturen gebildet werden, wie z.B. Ringstrukturen aus 4, 6, oder sogar neun tetraedrisch koordinierten Si- oder Al-Atomen. Die unterschiedlichen Zeolithtypen werden oft über die größte Ringgröße definiert, da diese Größe bestimmt, welche Gastmoleküle die Zeolithstruktur penetrieren können. Üblicherweise wird zwischen großporigen Zeolithen mit bis zu 12 Tetraedern Ringgröße, mittelgroßporigen Zeolithen mit bis zu 10 Tetraedern Ringgröße und kleinporigen Zeolithen mit bis zu 8 Tetraedern Ringgröße unterschieden. Die Zeolithe werden durch die ,Structural Commission of the International Zeolite Association' in Strukturtypen eingeteilt, welche durch Codes aus drei Buchstaben angegeben werden. Bekannte kleinporige Zeolithe sind die Strukturtypen AEI, CHA (Chabasit), ERI (Erionit), LEV (Levyne) und KFI. Beispiele großporiger Zeolithe sind die des Strukturtyps Faujasit (FAU).

Für den erfindungsgemäßen Katalysator können sowohl groß- als auch mittelgroß- oder kleinporige Zeolithe verwendet werden. Beispiele geeigneter Zeolithe gehören den Strukturtypen ABW, AEI, AFX, BEA, CHA, DDR, ERI, ESV, FAU, FER, KFI, LEV, LTA, MER MFI, MWW, SOD oder STT an.

Bevorzugt wird ein kleinporiger Zeolith des Strukturtyps AEI, AFX, CHA oder LEV. Besonders bevorzugt wird ein Zeolith des Strukturtyps CHA. Das SiO₂ : Al₂O₃-Verhältnis (SAR) ist bevorzugt 2 : 100, besonders bevorzugt 5 : 50, und weiterhin bevorzugt 5 : 40.

Für die vorliegende Erfindung soll der Begriff 'Zeolith' auch nicht-zeolithische Molekularsiebe beinhalten, welche gelegentlich als ,Zeolith-ähnliche Strukturen' bezeichnet werden. Es werden bevorzugt Molekularsiebe der oben genannten Strukturtypen verwendet. Beispiele beinhalten Silizium-Aluminium-Phosphat-Zeolithe, welche auch als SAPO bezeichnet werden, und Aluminium-Phosphat-Zeolithe, welche als AIPO bekannt sind.

In dieser Erfindung bezeichnet der Begriff 'nicht-zeolithisches Molekularsieb' ein über Ecken verbundenes Gitter aus tetraedrisch koordinierten Atomen, wobei zumindest ein Teil der tetraedrischen Gitterpositionen durch ein anderes Atom als Silizium oder Aluminium besetzt sind. Falls die Siliziumatome teilweise durch Aluminiumatome und Phosphoratome ersetzt sind, handelt es sich um Silikoaluminophosphate, auch SAPO genannt. Sind alle Siliziumatome durch Aluminiumatome und Phosphoratome ersetzt worden, handelt es sich um Aluminophosphate, auch AIPO genannt.

Ein "Zeotyp" beinhaltet jegliche Materialien basierend auf einer spezifischen Zeolithstruktur. Somit beinhaltet ein spezifischer Zeotyp zum Beispiel Aluminosilikate, SAPOs und AlPOs, die auf einer spezifischen Zeolithstruktur basieren. So gehören sowohl Chabasite (CHA), die Aluminosilikate SSZ-13, die Silikoaluminophosphate SAPO-34 und das Aluminophosphat MeAIPO-47 alle zum selben Zeotyp. Zeolithische und nicht-zeolithische Molekularsiebe des gleichen Zeotyps sind in der Datenbank der Internationalen Zeolithgesellschaft (International Zeolite Association; IZA) aufgeführt. Der Fachmann kann dieses Wissen und die IZA-Datenbank nutzen, ohne den Schutzbereich dieser Erfindung zu verlassen.

Die Beschichtung des Trägersubstrats kann nach den dem Fachmann geläufigen Methoden hergestellt werden, so etwa nach den üblichen Tauchbeschichtungsverfahren bzw. Pump- und Saug-Beschichtungsverfahren mit sich anschließender thermischer Nachbehandlung (Kalzination).

Bevorzugt erstrecken sich die Beschichtungen A und B von Ende X bis Ende Y des Trägersubstrats. Die Beschichtungen können jedoch auch nur über 10% bis 80% der Gesamtlänge L des Trägersubstrats aufgetragen werden, um den Aufbau eines zonierten Katalysators zu ermöglichen.

Dem Fachmann ist bekannt, dass im Falle von Wandflussfiltern deren durchschnittliche Porengröße und die mittlere Teilchengröße der zu beschichtenden Materialien so aufeinander abgestimmt werden können, dass diese auf den porösen Wänden liegen, die die Ein- und Auslasskanäle des Wandflussfilters trennen (Aufwand-Beschichtung). Die mittlere Teilchengröße der zu beschichtenden Materialien kann aber auch so gewählt werden, dass sich diese in den porösen Wänden befinden, dass also eine Beschichtung der inneren Porenoberfläche erfolgt (Inwand-Beschichtung). In diesem Fall muss die mittlere Teilchengröße der zu beschichtenden Materialien klein genug sein, um in die Poren des Wandflussfilters einzudringen.

Ebenfalls kann die Beschichtung der Eingangskanäle mit einer SCR-aktiven Beschichtung, und die Beschichtung der Auslasskanäle mit einer ASC-Beschichtung erfolgen. Dabei kann zusätzlich eine Zonierung über die Länge des Substrates Verwendung finden.

Die vorliegende Erfindung umfasst ebenfalls ein Abgasreinigungssystem, welches einen erfindungsgemäßen Katalysator und einen SCR-Katalysator umfasst. Letzterer ist dem erfindungsgemäßen Katalysator im Abgasstrom vorgeschaltet. Dabei kann der SCR zusammen mit dem erfindungsgemäßen in einem Gehäuse verbaut sein, oder auch in einem separaten Gehäuse angeordnet sein. In ersterem Fall kann bei geringem Abgasstrom und geringem Abstand noch eine Beheizung des SCR durch Strahlungswärme erfolgen, im letzteren Fall können der SCR und der ASC flexibler im Fahrzeug angeordnet werden.

Der dem ASC im Abgasstrom vorgeschaltete SCR-Katalysator kann prinzipiell aus allen für die SCR-Reaktion von Stickoxiden mit Ammoniak aktiven Katalysatoren ausgewählt werden, insbesondere aus solchen, die dem Fachmann auf dem Gebiet der Autoabgaskatalyse als gebräuchlich bekannt sind. Dies schließt Katalysatoren vom Mischoxid-Typ ebenso ein, wie Katalysatoren auf Basis von Zeolithen, insbesondere von Übergangsmetallausgetauschten Zeolithen.

Die Erfindung wird anhand von Beispielen näher beschrieben:

### Beispiel 1 - erfindungsgemäßer Katalysator K1

Beschichtung A: Platin wurde durch die Incipient Wetness-Methode auf Titanoxid aufgebracht. Das erhaltene Pulver wurde getrocknet und kalziniert. Das getrocknete Pulver enthält 7 Gewichts-% Platin und wird im Folgenden als Pt/TiO₂ bezeichnet.

Danach wurde ein wässriges Boehmit-Sol hergestellt und Titanoxid (TiO₂) hinzugegeben. Zu dieser Dispersion wurde Pt/TiO₂ hinzugefügt. Die Trockenanteile betrugen danach 3 Gewichts-% Pt/TiO₂, 87 Gewichts-% TiO₂ und 10 Gewichts-% Al₂O₃.

Mit dem so hergestellten Washcoat wurde ein handelsübliches Katalysatorsubstrat aus Cordierit mit der Zelligkeit von 62 Zellen/cm² und der Wandstärke von 110 µm beschichtet, so dass die Pt-Beladung 1,07 g/l, bezogen auf das Katalysatorvolumen, betrug. Die resultierende Washcoatbeladung betrug 50 g/l, bezogen auf des Katalysatorvolumen.

Beschichtung B: Ein Pulver aus einem Cu-ausgetauschten Zeolith des Typs CHA wurde in ein wässriges Boehmit-Sol eingerührt. Mit dem so hergestellten Washcoat wurde das mit Beschichtung A versehene Katalysatorsubstrat mit einer Beladung von 150 g/l, bezogen auf das Katalysatorvolumen, beschichtet, getrocknet und bei 500°C calciniert.

### Beispiel 2 - erfindungsgemäßer Katalysator K2

Beschichtung A: Platin wurde durch die Incipient Wetness-Methode auf Titanoxid aufgebracht. Das erhaltene Pulver wurde getrocknet und kalziniert. Das getrocknete Pulver enthält 7 Gewichts-% Platin und wird im Folgenden als Pt/TiO₂ bezeichnet.

Danach wurde ein wässriges Boehmit-Sol hergestellt und Titanoxid (TiO₂) hinzugegeben. Zu dieser Dispersion wurde Pt/TiO₂ hinzugefügt. Die Trockenanteile betrugen danach 2 Gewichts-% Pt/TiO₂, 88 Gewichts-% TiO₂ und 10 Gewichts-% Al₂O₃.

Mit dem so hergestellten Washcoat wurde ein handelsübliches Katalysatorsubstrat aus Cordierit mit der Zelligkeit von 62 Zellen/cm² und der Wandstärke von 110 µm beschichtet, so dass die Pt-Beladung 1,07 g/l, bezogen auf das Katalysatorvolumen, betrug. Die resultierende Washcoatbeladung betrug 75 g/l, bezogen auf des Katalysatorvolumen.

Beschichtung B: Ein Pulver aus einem Cu-ausgetauschten Zeolith des Typs CHA wurde in ein Boehmit-Sol eingerührt. Mit dem so hergestellten Washcoat wurde das mit Beschichtung A versehene Katalysatorsubstrat mit einer Beladung von 150 g/l, bezogen auf das Katalysatorvolumen, beschichtet, getrocknet und bei 500°C calciniert.

### Beispiel 3 - Vergleichskatalysator VK1

Beschichtung A: Platin wurde durch die Incipient Wetness-Methode auf Titanoxid aufgebracht. Das erhaltene Pulver wurde getrocknet und kalziniert. Das getrocknete Pulver enthält 7 Gewichts-% Platin und wird im Folgenden als Pt/TiO₂ bezeichnet.

Danach wurde ein wässriges Boehmit-Sol hergestellt und Titanoxid (TiO₂) hinzugegeben. Zu dieser Dispersion wurde Pt/TiO₂ hinzugefügt. Die Trockenanteile betrugen danach 6 Gewichts-% Pt/TiO₂, 84 Gewichts-% TiO₂ und 10 Gewichts-% Al₂O₃.

Mit dem so hergestellten Washcoat wurde ein handelsübliches Katalysatorsubstrat aus Cordierit mit der Zelligkeit von 62 Zellen/cm² und der Wandstärke von 110 µm beschichtet, so dass die Pt-Beladung 1,07 g/l, bezogen auf das Katalysatorvolumen, betrug. Die resultierende Washcoatbeladung betrug 25 g/l, bezogen auf des Katalysatorvolumen.

Beschichtung B: Ein Pulver aus einem Cu-ausgetauschten Zeolith des Typs CHA wurde in ein Boehmit-Sol eingerührt. Mit dem so hergestellten Washcoat wurde das mit Beschichtung A versehene Katalysatorsubstrat mit einer Beladung von 150 g/l, bezogen auf das Katalysatorvolumen, beschichtet, getrocknet und bei 500°C calciniert.

### Testung

Zuerst wurde aus den 3 Katalysatoren K1, K2 und VK1 jeweils ein Bohrkern der Abmessungen 1" x 3" entnommen. Die Bestimmung der katalytischen Aktivität erfolgte in einer Modellgasanlage mit 300 ppm NH₃, 5% O₂ und 5% H₂O, Rest: N₂, wobei die Temperatur mit 10°C/min von 150°C auf 600°C erhöht wurde. Die Raumgeschwindigkeit betrug 200000 h⁻¹.

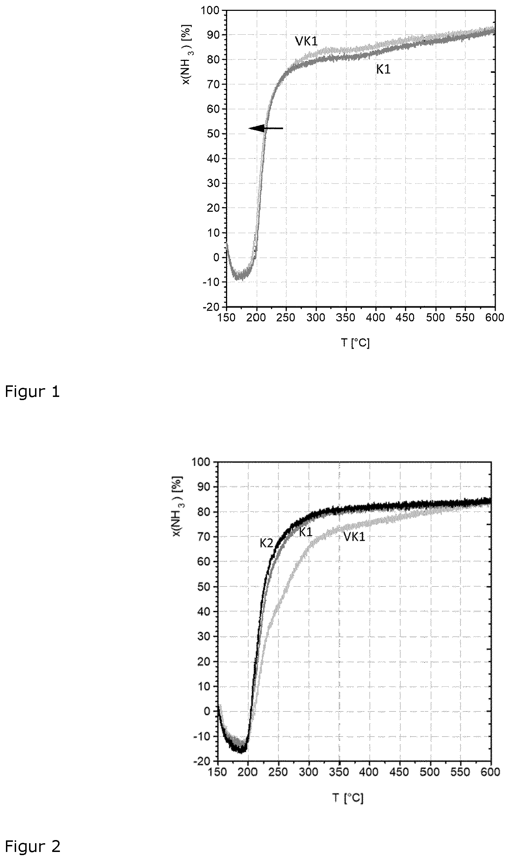

Die Aktivität im Frischzustand wurde anhand von K1 und VK1 überprüft. Figur 1 zeigt den Ammoniakumsatz. Wie zu erkennen ist, ist die katalytische Aktivität von K1 und VK1 für die Ammoniakoxidation nahezu identisch. Anschließend wurden die Bohrkerne von K1, K2 und VK1 hydrothermal für 16 Stunden bei 750°C in 10% H₂O und 10% O₂ (Rest: N₂) gealtert.

Figur 2 zeigt den Ammoniak-Umsatz sowie die N₂O-Bildung als Funktion der Temperatur für die Katalysatoren im gealterten Zustand. Die erfindungsgemäßen Katalysatoren K1 und K2 weisen zwischen 200 und 550°C deutlich höhere NH₃-Umsätze als der Vergleichskatalysator VK1 auf, obwohl ihr Platingehalt gleich ist wie der des Vergleichskatalysators VK1. Eine Erhöhung der Washcoatbeladung der ersten Schicht auf 50g/l, bezogen auf das Katalysatorvolumen, verbessert die Alterungsstabilität also signifikant.

Die Ergebnisse für die gealterten Katalysatoren sind in Tabelle 1 zusammengestellt.

Interessant ist dabei auch, dass sich die NH₃-Umsätze durch eine weitere Washcoatbeladungserhöhung der ersten Schicht von 50 g/l auf 75 g/l, bezogen auf das Katalysatorvolumen, nicht mehr signifikant steigern ließen; der NH₃-Umsatz über K1 und K2 ist nahezu gleich. Damit führt eine weitere Washcoatbeladungserhöhung der ersten Schicht zu höherem Materialbedarf und damit erhöhten Kosten als auch zu einer Erhöhung des Staudrucks, den der Katalysator verursacht, ohne signifikante Vorteile zu bringen.

**Tabelle 1:**

| | K1 | K2 | VK1 |
|---|---|---|---|
| Washcoatbeladung der unteren Schicht | 50 g/l | 75 g/l | 25 g/l |
| T₅₀ (NH₃) [°C] | 230 | 225 | 267 |

## Patentansprüche

1. Katalysator, umfassend
- ein Trägersubstrat der Länge L, das sich zwischen einem Ende X und einem Ende Y erstreckt
- Beschichtung A, als erste Schicht auf dem Träger angeordnet und Platin auf einem Metalloxid α und ein Metalloxid β, das kein Edelmetall trägt, enthaltend und
- Beschichtung B, als zweite Schicht auf Beschichtung A aufgebracht, ein Cu-ausgetauschtes Molekularsieb und kein Edelmetall enthaltend,
wobei die Washcoatgesamtmenge von Beschichtung A 40 g/l Washcoat oder mehr, bezogen auf das beschichtete Katalysatorvolumen, beträgt.

2. Katalysator gemäß Anspruch 1, **dadurch gekennzeichnet, dass** die Washcoatgesamtmenge von Beschichtung A 50 g/l Washcoat oder mehr, bezogen auf das beschichtete Katalysatorvolumen, beträgt.

3. Katalysator gemäß Anspruch 1 und / oder 2, **dadurch gekennzeichnet, dass** die Washcoatgesamtmenge von Beschichtung A 75 g/l Washcoat oder weniger, bezogen auf das beschichtete Katalysatorvolumen, beträgt.

4. Katalysator gemäß einem oder mehreren der Ansprüche 1 bis 3, **dadurch gekennzeichnet, dass** die Washcoatgesamtmenge für die Beschichtung A 40g/l bis 75 g/l, ganz besonders bevorzugt 50 g/l bis 75 g/l, bezogen auf das beschichtete Katalysatorvolumen, beträgt.

5. Katalysator gemäß einem oder mehrerer der Ansprüche 1 bis 4, **dadurch gekennzeichnet, dass** es sich bei dem Trägersubstrat um ein Durchflusssubstrat handelt.

6. Katalysator gemäß einem oder mehrerer der Ansprüche 1 bis 5, **dadurch gekennzeichnet, dass** Metalloxid α und Metalloxid β unterschiedlich sind.

7. Katalysator gemäß einem oder mehrerer der Ansprüche 1 bis 6, **dadurch gekennzeichnet, dass** Metalloxid α Titanoxid ist.

8. Katalysator gemäß einem oder mehrerer der Ansprüche 1 bis 7, **dadurch gekennzeichnet, dass** Metalloxid β Aluminiumoxid ist.

9. Katalysator gemäß einem oder mehrerer der Ansprüche 1 bis 8, **dadurch gekennzeichnet, dass** Metalloxid α Titanoxid und Metalloxid β Aluminiumoxid ist.

10. Katalysator gemäß einem oder mehrerer der Ansprüche 1 bis 9, **dadurch gekennzeichnet, dass** der Katalysator kein Edelmetall außer Platin enthält.

11. Katalysator gemäß einem oder mehreren der Ansprüche 1 bis 10, **dadurch gekennzeichnet, dass** in Beschichtung A das Platin in Form von Partikeln auf dem Metalloxid α vorliegt und eine über die Partikelanzahl gemittelte durchschnittliche Partikelgröße von 50 bis 200 nm, bevorzugt 80 bis 120 nm, aufweist.

12. Katalysator gemäß einem oder mehreren der Ansprüche 1 bis 11, **dadurch gekennzeichnet, dass** es sich bei dem in Beschichtung B enthaltenden Cu-ausgetauschten Molekularsieb um einen Cu-ausgetauschten Zeolithen handelt.

13. Katalysator gemäß einem oder mehreren der Ansprüche 1 bis 12, **dadurch gekennzeichnet, dass** es sich bei dem Cu-ausgetauschten Molekularsieb in Beschichtung B um einen Cu-ausgetauschten Zeolithen des Typs AEI, AFX, CHA oder LEV, bevorzugt CHA, handelt.

14. Abgasreinigungssystem, **dadurch gekennzeichnet, dass** es einen Katalysator gemäß einem oder mehreren der Ansprüche 1 bis 13 und einen SCR-Katalysator umfasst.
